# FASCICULE DE BREVET EUROPEEN

(11) **EP 3 642 091 B1**
(45) Date de publication et mention de la délivrance du brevet: **25.10.2023**
(21) Numéro de dépôt: 18735680.3
(22) Date de dépôt: 15.06.2018
(51) Int. Cl.: B60T 17/08, B61H 5/00, F16D 65/097, F16D 65/02, F16D 55/00

(54) **SYSTÈME DE FREINAGE FERROVIAIRE POUR VÉHICULE FERROVIAIRE**
BREMSSYSTEM FÜR SCHIENENFAHRZEUGE
RAILWAY VEHICLE BRAKING SYSTEM

(30) Priorité: 19.06.2017 FR 1755566
(43) Date de publication de la demande: 29.04.2020
(73) Titulaire: Faiveley Transport Amiens, 80000 Amiens (FR)
(72) Inventeur: GONCALVES, Claudino, 80620 Ribeaucourt (FR); MAILLARD, Louis, 80136 Rivery (FR); LAURENT, Fabrice, 80260 Saint Gratien (FR); CROSNIER, Guillaume, 80170 Rosières en Santerre (FR)
(74) Mandataire: Santarelli
(86) Numéro de dépôt international: PCT/FR2018/051428
(87) Numéro de publication internationale: WO 2018/234665

(56) Documents cités:
- GB-A- 2 257 483
- GB-A- 2 516 505
- JP-A- S6 088 237
- US-A1- 2012 312 642

## Description

### DOMAINE DE L'INVENTION

L'invention concerne le domaine du freinage des véhicules ferroviaires et plus particulièrement les systèmes de freinage ferroviaires pour véhicule ferroviaire, pourvus d'un frein de parking configuré pour agir sur un organe de freinage du véhicule, tel que par exemple un disque de frein, à l'aide de garnitures de frein, en particulier lorsque le véhicule ferroviaire est à l'arrêt.

### ARRIERE PLAN TECHNOLOGIQUE

Les véhicules ferroviaires sont généralement équipés d'étriers de frein de service et/ou de parking pourvus d'un cylindre de frein de service et/ou de parking.

Ce cylindre comporte un piston de freinage mobile d'une part, sous l'effet de l'action d'un ou plusieurs ressorts et d'autre part, sous l'effet d'un fluide sous pression.

Plus précisément, ce type de cylindre de freinage comporte un corps dans lequel et par rapport auquel le piston de freinage est mobile pour agir sur l'organe de freinage par l'intermédiaire d'une tige de poussée.

Le cylindre de frein comporte également une cavité ménagée dans le corps et prévue pour recevoir les ressorts, ainsi qu'une chambre de pression formée au moins partiellement dans la cavité, délimitée notamment par le piston de freinage et par le corps, et raccordée par un conduit à une source d'agent de pression.

Les garnitures de frein sont montées sur les étriers de frein et supportées par le cylindre de frein grâce à des axes porte-garnitures qui traversent les garnitures en évitant le disque de frein et qui sont assujettis mécaniquement au cylindre.

Le déplacement du piston de freinage sous l'effet des ressorts entraîne une action de freinage telle que le serrage d'un disque de frein entre les deux garnitures de frein, lesquelles garnitures sont déplacées sous l'action du piston de freinage.

Au contraire, le déplacement du piston de freinage sous l'effet du fluide sous pression entraîne une action inverse au freinage, à savoir le desserrage du disque de frein et permet ainsi le retrait du frein.

Classiquement, les garnitures de frein s'écartent du disque de frein sous l'action de ressorts de compression logés entre les deux garnitures et enroulés autour des axes porte-garnitures.

Plus précisément, lorsque la chambre de pression n'est pas alimentée par la source d'agent de pression, les ressorts sont configurés pour agir sur le piston de freinage pour le mettre dans une position de freinage ; tandis que lorsque la chambre de pression est alimentée par la source d'agent de pression, le piston de freinage agit en l'encontre des ressorts pour revenir dans une position de repos où le frein est armé mais non appliqué et les ressorts sont comprimés.

En d'autres termes, pour armer le frein, la chambre de pression est alimentée en agent de pression, aussi appelé fluide sous pression, via la source correspondante de sorte à déplacer le piston de freinage dans le corps et comprimer les ressorts ; tandis que pour appliquer le frein, la chambre de pression est vidangée de sorte que les ressorts poussent le piston de freinage.

On notera que l'action de freiner ou, en d'autres termes, l'application serrée des garnitures de frein contre le disque de frein entraîne classiquement une usure de ces garnitures, et nécessite, régulièrement leur remplacement.

La demande GB2257483A décrit un frein à disque pour véhicule, notamment pour une automobile, pourvu d'une paire de patins, d'une paire de pièces de guidage pour guider de manière coulissante les patins, et d'un ressort de rappel dont les extrémités sont insérées chacune dans un trou ménagé à l'extrémité de chacun des patins et qui est retenu dans la direction radiale par des moyens d'arrêts de la pièce de guidage.

### OBJET DE L'INVENTION

L'invention concerne un système de freinage pour véhicule ferroviaire, aux performances améliorées notamment en termes de sûreté et d'utilisation, tout en étant simple, commode et économique.

L'invention a ainsi pour objet un système de freinage ferroviaire pour véhicule ferroviaire à organes de freinage à garnitures et à au moins un disque, comportant au moins un jeu de dites garnitures, chaque garniture présentant au moins un organe de positionnement configuré pour permettre l'assujettissement mécanique de chaque dite garniture dans une position prédéterminée sur ledit système par rapport audit disque et une face principale d'appui configurée pour venir au contact dudit disque pour l'enserrer sous l'action, directe ou indirecte, d'un actionneur dudit système, ainsi qu'au moins un organe de rappel configuré pour écarter lesdites garnitures dudit disque pour le desserrer lorsque lesdites garnitures sont libérées de l'action, directe ou indirecte, dudit actionneur ; chaque garniture présente plusieurs côtés définissant une tranche et au moins un organe d'assujettissement ménagé sur ladite tranche, ledit au moins un organe de rappel présente deux pattes d'extrémité qui sont opposées, raccordées l'une à l'autre par une portion élastique, et configurées pour être assujetties mécaniquement chacune avec un dit organe d'assujettissement desdites garnitures respectives, et ledit système est configuré de sorte que lesdits organes d'assujettissement et lesdites pattes d'extrémité sont situés à distance dudit au moins un organe de positionnement, caractérisé en ce que ledit au moins un organe d'assujettissement respectif est ménagé sensiblement au centre d'un desdits côtés.

Le système de freinage selon l'invention permet, d'une part en distinguant le ou les organes de rappel des garnitures des organes de positionnement, et d'autre part en mettant à distance les organes d'assujettissement pour les pattes d'extrémité du ou des organes de rappel et des organes de positionnement, de mieux maîtriser à la fois la force de rappel exercée sur les garnitures et la ou les zones d'application de cette force sur ces garnitures.

Au surplus, dans le système selon l'invention, le fait d'avoir un ou plusieurs organes de rappel distincts et non solidaires des organes de positionnement, et par conséquent des axes porte-garnitures qui sont prévus pour être introduits dans les organes de positionnement, permet un montage/démontage aisé des garnitures lorsque celles-ci sont à changer.

En particulier, pour le montage, le ou les organes de rappel peuvent être assemblés sur les garnitures et l'ensemble peut être monté dans le système de freinage, notamment dans une position prédéterminée de part et d'autre du disque de frein, et ensuite les garnitures peuvent être bloquées dans cette position par insertion du ou des axes porte-garnitures dans les organes de positionnement, sans avoir à agir sur le ou les organes de rappel. Pour le démontage, les garnitures peuvent être débloquées dans leur position par retrait du ou des axes porte-garnitures des organes de positionnement, sans avoir à agir sur les le ou les organes de rappel, et ensuite ce ou ces derniers peuvent être retirés du système de freinage, ensemble avec les garnitures.

On notera également que l'organe de rappel n'est monté dans le système que par le biais de ses pattes d'extrémité qui sont assujetties sur les garnitures, le reste de l'organe de rappel étant ainsi libre dans le système. En d'autres termes, l'organe de rappel n'est pas monté sur le corps du système ni même sur un élément de positionnement des garnitures.

Le système de freinage selon l'invention est ainsi particulièrement performant notamment en termes de sûreté et d'utilisation, tout en étant simple, commode et économique.

Selon des caractéristiques préférées, simples, commodes et économiques du système selon l'invention :
- chaque dit organe d'assujettissement s'étend, en section, au niveau d'une zone d'appui définie par ladite face d'appui de ladite garniture respective ;
- chaque dit organe de positionnement est ménagé en dehors de ladite zone d'appui de ladite garniture respective ;
- au moins un dit organe d'assujettissement est formé par un orifice ménagé dans ladite tranche ou par un pontet en saillie de ladite tranche ;
- chaque dite garniture comporte une base et une couche d'un matériau de friction rapportée sur ladite base, et au moins un dit organe d'assujettissement est ménagé dans la base ou dans la couche de matériau de friction ;
- ladite portion élastique dudit au moins un organe de rappel comporte deux branches raccordées chacune à une patte d'extrémité respective ainsi qu'un tronçon de jonction raccordant les deux dites branches, ledit système étant configuré de sorte que lesdites branches s'étendent depuis lesdites pattes d'extrémité à distance desdites garnitures et ledit tronçon de jonction est prévu pour se trouver à l'opposé du disque ;
- ledit au moins un organe de rappel est formé par un ressort de torsion ou par un ressort lame ;
- lesdites pattes d'extrémité dudit au moins un organe de rappel sont formées par des extrémités pliées de ladite portion élastique ou par des pièces rapportées ;
- lesdites pattes d'extrémité dudit au moins un organe de rappel sont assujetties mécaniquement avec lesdits organes d'assujettissement respectifs par insertion à force, ou par soudage, ou par rivetage ou encore par collage ;
- ledit au moins un organe de rappel est réalisé en matière métallique ou plastique et est configuré pour appliquer une force de l'ordre d'environ 30 N à environ 100 N sur lesdites garnitures ;
- ledit système comporte deux dits organes de rappel et quatre dits organe d'assujettissement, qui sont disposés de part et d'autre des deux dites garnitures, de préférence symétriquement ;
- ledit système comporte un dit frein de parking ayant un corps pourvu d'un cylindre présentant une cavité, d'un dit support garniture assujetti mécaniquement audit cylindre et configuré pour porter lesdites garnitures et recevoir au moins partiellement ledit disque, et d'un dit actionneur comportant un piston de freinage au moins partiellement logé dans ladite cavité, mobile par rapport audit corps et configuré pour agir sur au moins une dite garniture au travers dudit support garniture ;
- ledit support garniture comporte deux mâchoires séparées d'un espace prévu pour recevoir au moins partiellement ledit disque, ainsi qu'au moins un axe porte-garnitures configuré pour coopérer avec lesdits organes de positionnements desdites garnitures et bloquer ces dernières dans ladite position prédéterminée, ledit au moins un axe porte-garnitures étant situé à distance dudit disque lorsque ce dernier est reçu dans ledit espace entre lesdites mâchoires ; et/ou
- une première des deux dites mâchoires est montée sur ledit cylindre tandis qu'une deuxième des deux dites mâchoires est montée sur ladite première mâchoire par l'intermédiaire d'au moins une colonnette qui s'étend depuis ladite première mâchoire, et ledit piston de freinage agit directement sur une dite garniture montée sur ladite première mâchoire et indirectement, par déplacement dudit corps via ladite au moins une colonnette et via ladite deuxième mâchoire, sur une autre dite garniture montée sur cette deuxième mâchoire.

Il est à noter que le frein de parking est normalement appliqué lorsque le véhicule ferroviaire est à l'arrêt, de sorte à maintenir immobilisé ce véhicule et permettre à son utilisateur et en particulier son conducteur de quitter le véhicule. Le frein de parking n'est pas dimensionné pour stopper le véhicule ferroviaire en roulage mais seulement pour le maintenir à l'arrêt. Cependant, le système selon l'invention peut aussi être utilisé dans le cadre d'un frein de service qui permet de freiner le véhicule alors que ce dernier est en roulage.

### BREVE DESCRIPTION DES DESSINS

On va maintenant poursuivre l'exposé de l'invention par la description d'un exemple de réalisation, donnée ci-après à titre illustratif et non limitatif, en référence aux dessins annexés sur lesquels :
- la figure 1 illustre partiellement et schématiquement un véhicule ferroviaire pourvu d'un disque de frein de parking, dit disque moteur, sur lequel est monté un système de freinage ferroviaire conforme à un mode de réalisation de l'invention ;
- la figure 2 illustre schématiquement le système de freinage ferroviaire de la figure 1 ;
- les figures 3 à 6 représentent en perspective et selon différents angles de vue, le système de freinage ferroviaire selon l'invention associé au disque moteur ;

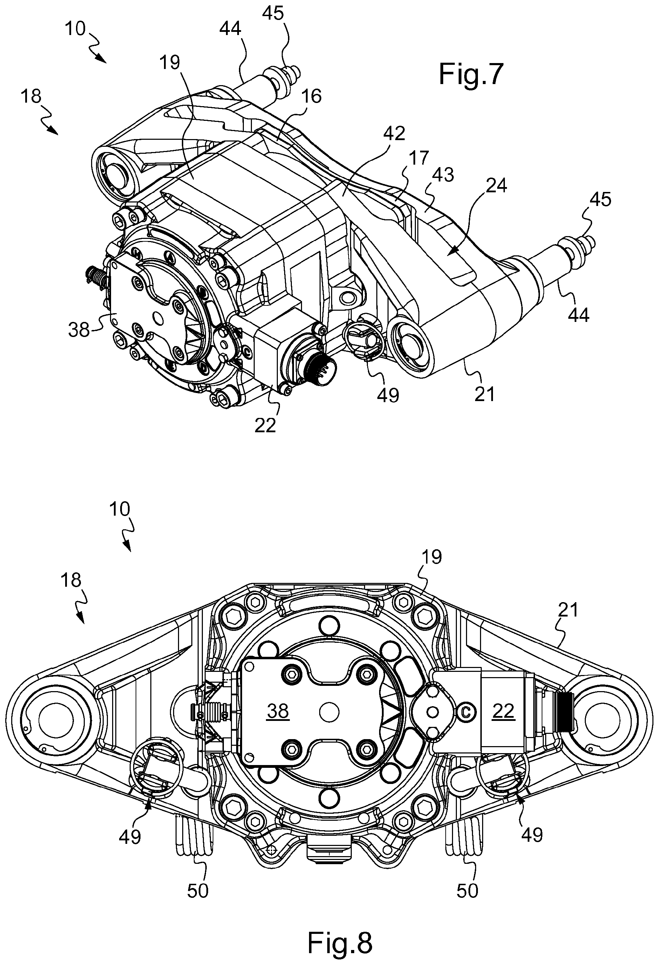

- les figures 7 et 8 représentent en perspective isolée selon deux angles de vues différents, le système de freinage ferroviaire selon l'invention, sans le disque moteur ;
- les figures 9 à 14 illustrent un organe de rappel du système de freinage ferroviaire selon l'invention, pris selon différents angles de vue ;
- les figures 15 à 18 illustrent une garniture de frein du système de freinage ferroviaire selon l'invention, pris selon différents angles de vue ; et
- les figures 19 à 23 sont des vues partielles du système de freinage ferroviaire associé au disque moteur, pris dans différents états pour montrer le montage des garnitures de frein sur le disque moteur à l'aide de l'organe de rappel.

### DESCRIPTION DETAILLEE D'UN EXEMPLE DE REALISATION

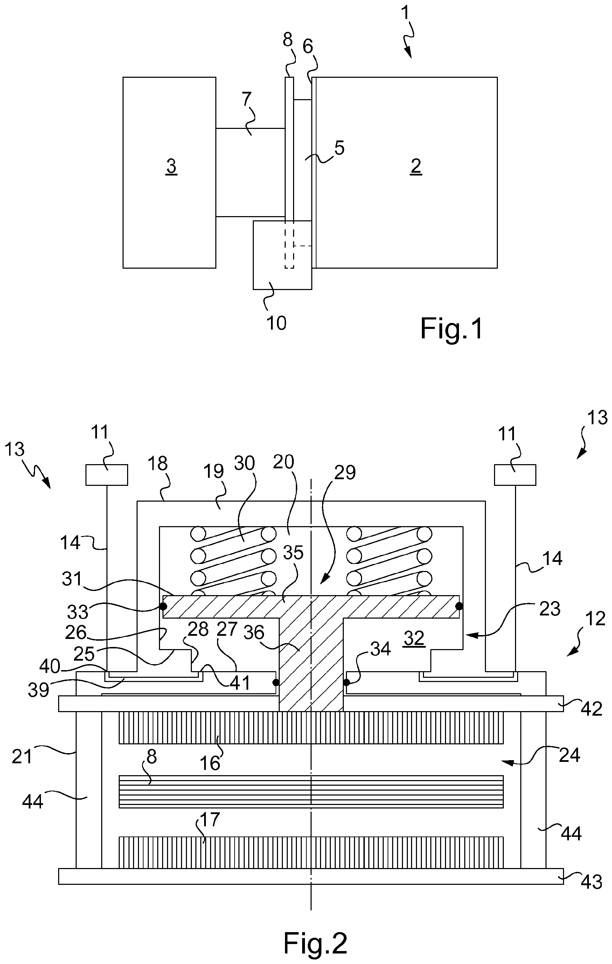

La figure 1 représente partiellement et schématiquement un véhicule ferroviaire 1, par exemple du type métro, pourvu d'un système d'entraînement par traction électrique 2, en particulier ici une machine électrique tournante fonctionnant en mode moteur, et d'un essieu 3 portant des roues (non représentées) et connecté au système d'entraînement 2 pour la mise en rotation des roues par l'intermédiaire d'un système d'accouplement 4.

Ce système d'accouplement 4 comporte ici un plateau d'accouplement 5 assujetti mécaniquement sur un flasque moteur 6 du système d'entraînement 2, ainsi qu'un mécanisme à moyeu 7 connecté à une extrémité au plateau d'accouplement 5 et à une extrémité opposée à l'essieu 3.

Le véhicule ferroviaire 1 est en outre pourvu d'un disque de frein 8, dit ici disque moteur, qui est interposé entre le plateau d'accouplement 5 et le mécanisme à moyeu 7.

On notera que sur la figure 1, l'ensemble formé du système d'entraînement 2 et du système d'accouplement 4 s'étend globalement dans une direction sensiblement longitudinale, tandis que l'essieu 3 et le disque moteur 8 s'étendent chacun globalement dans une direction sensiblement transversale.

Le véhicule ferroviaire 1 est également pourvu d'un système de freinage ferroviaire 10 ici assujetti mécaniquement au flasque moteur 6 et configuré pour être en prise sur le disque moteur 8 de sorte à le bloquer lorsque le véhicule ferroviaire 1 est à l'arrêt et/ou à le laisser libre lorsque le véhicule ferroviaire 1 est en roulage.

La figure 2 illustre schématiquement et partiellement le système de freinage ferroviaire 10 en prise sur le disque moteur 8.

Ce système de freinage ferroviaire 10 est pourvu d'un frein de parking 12 formé ici par un étrier mobile et flottant, visible sur cette figure dans une configuration où le frein de parking 12 n'est pas appliqué sur le disque moteur 8.

Le système de freinage ferroviaire 10 comporte en outre un réseau 13 d'alimentation en agent de pression, ici pneumatique, pourvu notamment d'une source d'agent de pression 11 qui est connectée au frein de parking 12 par l'intermédiaire d'une conduite de distribution 14.

Le système de freinage ferroviaire 10 comporte aussi un organe de freinage pourvu ici du disque moteur 8 et d'un jeu de deux garnitures 16 et 17 configurées pour prendre en sandwich le disque 8.

Le frein de parking 12 comporte un corps 18 pourvu d'une première portion 19 dans laquelle est ménagée une cavité 20, et d'une seconde portion 21 assujettie mécaniquement à la première portion 19.

La première portion 19 est appelée cylindre de frein et la seconde portion 21 est appelée support garnitures.

Le corps 18 est en outre pourvu d'une paroi interne 23 délimitant la cavité 20 ménagée dans le cylindre 19 et formant une barrière entre cette cavité 20 et un espace de serrage 24 défini par le support garnitures 21.

Cette paroi interne 23 présente un premier tronçon 25 s'étendant depuis une face interne 26 du cylindre 19 et un second tronçon 27 se raccordant au premier tronçon 25 par l'intermédiaire d'un épaulement 28.

Le frein de parking 12 comporte en outre un actionneur 29 pourvu d'un organe ressort 30 (appelé aussi organe à ressorts) logé dans la cavité 20 du cylindre 19 et d'un piston de freinage 31 mobile par rapport au corps 18 et délimitant avec le corps 18 une chambre de pression 32 de frein de parking.

Cette chambre de pression 32 est ménagée dans la cavité 20 et délimitée par le piston de freinage 31, par la face interne 26 du cylindre 19 et par la paroi interne 23 du corps 18.

Le piston de freinage 31 comporte ici une tête 35 logée dans la cavité 20 et une tige de poussée 36 s'étendant depuis de la tête 35 et saillant dans l'espace de serrage 24 au travers d'une ouverture 37 ménagée dans la paroi interne 23 du corps 18.

La tête 35 est mobile par rapport au corps 18 dans la cavité 20 selon une première direction axiale, et la tige de poussée 36 est également mobile par rapport au corps 18 à la fois dans la cavité 20 et dans l'espace de serrage 24 suivant la première direction axiale.

Le frein de parking 12 est en outre pourvu d'un premier organe d'étanchéité 33 interposé entre la tête 35 du piston de freinage 31 et la face interne 26 du cylindre 19, et d'un second organe d'étanchéité 34 interposé entre un bord libre 38 de la paroi interne 23 au niveau de l'ouverture 37 et la tige de poussée 36 du piston de freinage 31.

La chambre de pression 32 est raccordée à la conduite de distribution 14 par un canal 39 ménagé dans le corps 18, lequel canal 39 débouche d'une part, à une première extrémité, à l'extérieur du corps 18 par un premier orifice 40 où se raccord la conduite 14 et d'autre part, à une seconde extrémité opposée à la première extrémité, dans la chambre de pression 32 par un second orifice 41.

Le support garnitures 21 du frein de parking 12 est ici pourvu d'une première mâchoire 42 montée sur le cylindre 19 et d'une deuxième mâchoire 43 montée sur la première mâchoire 42 par l'intermédiaire de colonnettes 44 qui s'étendent depuis la première mâchoire 42, à l'opposé du cylindre 19.

La garniture de frein 16 est ici montée sur la première mâchoire 42, d'un côté du disque moteur 8, tandis que la garniture de frein 17 est ici montée sur la deuxième mâchoire 43, de l'autre côté du disque moteur 8.

Le frein de parking 12 est ici configuré de sorte que le piston de freinage 31 est prévu pour agir directement, au travers de la première mâchoire 42, sur la garniture de frein 16 qui vient au contact du disque moteur 8.

Comme mentionné plus haut, le frein de parking 12 est ici agencé comme un étrier flottant de sorte que c'est d'abord l'action de déplacer, dans une première direction axiale vers le disque 8, le piston de freinage 31 et la garniture 16, cette dernière venant appliquer un effort sur un côté du disque 8 et, lorsque cet effort atteint une valeur seuil prédéterminée, c'est l'ensemble du corps 18 qui se déplace, grâce à l'action des colonnettes 44, dans une seconde direction axiale opposée à la première direction axiale, pour rapprocher la garniture 17 et venir appliquer également un effort avec cette dernière sur un côté opposé du disque 8.

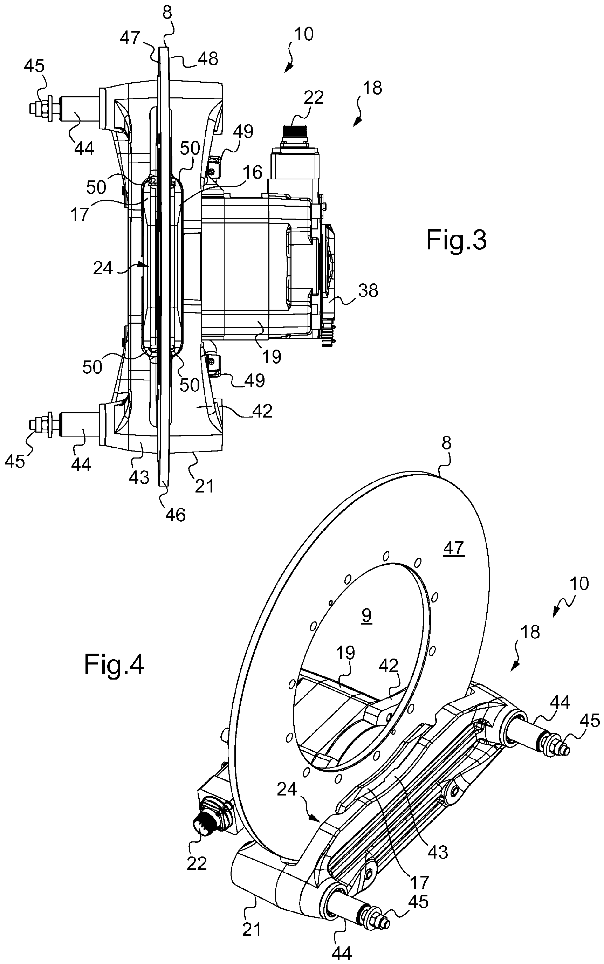

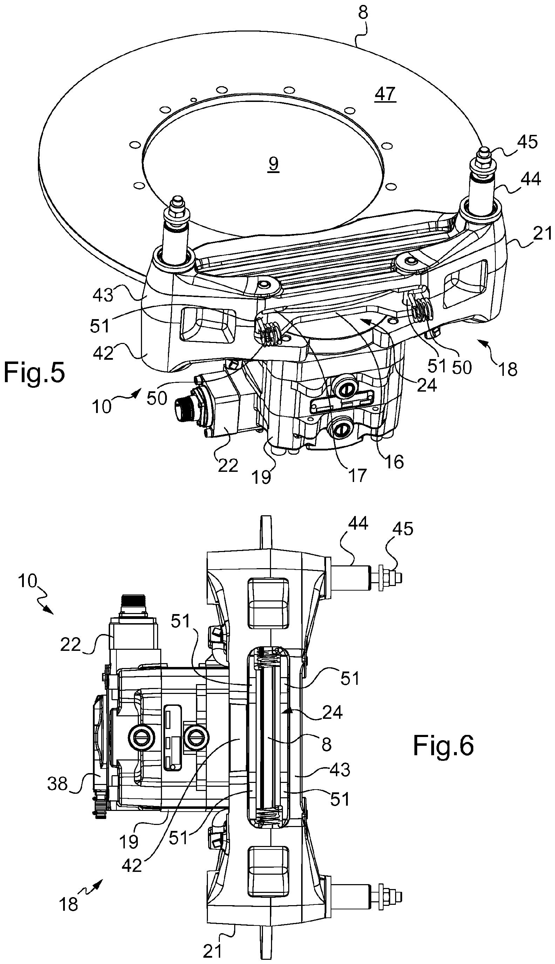

Les figures 3 à 6, puis 7 et 8 illustrent en perspective et selon différents angles de vue, le système de freinage ferroviaire 10 d'abord en prise avec le disque moteur 8, puis isolément, c'est-à-dire sans le disque moteur 8.

En particulier, le disque 8 présente ici une forme annulaire, percé d'un trou central 9 et pourvu d'un contour 46 raccordant deux faces opposées 47 et 48.

Lorsque le système de freinage ferroviaire 10 est fixé sur le flasque moteur 6, ici grâce à des systèmes vis-écrou 45 montés aux extrémités libres des colonnettes 44, le disque 8 est introduit partiellement, par sa tranche 46, dans l'espace 24 ménagé entre les mâchoires 42 et 43 du support garnitures 21. Le disque 8 est, dans cette position, logé entre les garnitures 16 et 17.

Le système de freinage ferroviaire 10 est pourvu ici de deux axes porte-garnitures 51 qui sont prévus pour les maintenir, globalement transversalement, dans une position prédéterminée dans l'espace 24.

En particulier, ces deux axes porte-garnitures 51 sont configurés pour traverser les garnitures 16 et 17 et pour être introduits dans des puits 77 et 78 respectivement ménagés dans les mâchoires 42 et 43.

En d'autres termes, les axes porte-garnitures 51 portent les garnitures 16 et 17 de sorte que ces dernières se trouvent en regard respectivement des faces 48 et 47 du disque 8.

Le système de freinage ferroviaire 10 est en outre pourvu de deux organes de rappel 50, chacun assujetti mécaniquement aux deux garnitures 16 et 17, et qui sont configurés pour les écarter du disque 8 pour le desserrer lorsque les garnitures 16 et 17 sont libérées de l'action, directe ou indirecte, de l'actionneur 29.

Le système de freinage ferroviaire 10 est ici pourvu aussi de mécanismes d'assemblage par exemple du type goupille-clip ou vis-écrou, pour assurer le montage du support garnitures 21 sur le cylindre 19.

Ce système de freinage ferroviaire 10 comporte en outre un mécanisme de déverrouillage manuel 38 de l'actionneur 29, monté sur le cylindre 21 et prévu pour ramener le piston de freinage 31 d'une position globalement longitudinalement avancée où il agit sur la garniture 16 à une position globalement longitudinalement reculée où il n'agit pas sur cette garniture 16.

Ce système de freinage ferroviaire 10 comporte également un support d'indicateurs 22, monté sur le cylindre 21 et ayant une pluralité de composants systémiques prévus par exemple pour effectuer différentes mesures dans le cylindre 21 et/ou pour transmettre et/ou traiter les données obtenues par ces mesures.

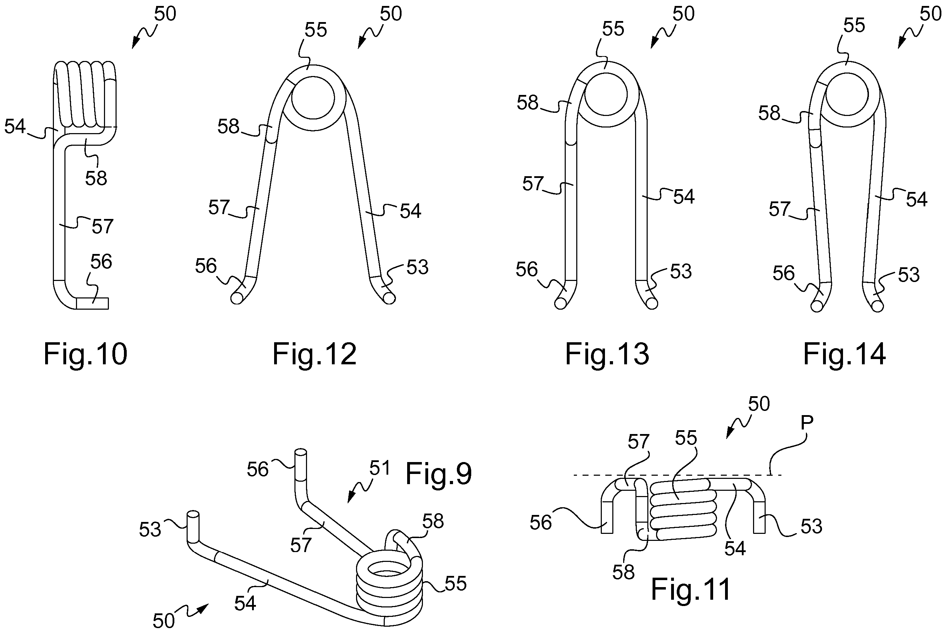

Les figures 9 à 14 illustrent un des organes de rappel 50. Les deux organes de rappel sont ici identiques.

Chaque organe de rappel 50 ici formé par un ressort de torsion, réalisé par exemple en matière métallique.

Les ressorts 50 sont chacun configurés pour appliquer une force de l'ordre d'environ 30 N à environ 100 N, préférentiellement entre 45 N et 90 N, sur les garnitures respectives 16 et 17.

Chaque ressort 50 présente deux pattes d'extrémité 53 et 56 qui sont opposées et raccordées l'une à l'autre par une portion élastique 52.

La portion élastique 52 comporte deux branches 54 et 57 raccordées respectivement aux pattes d'extrémité 53 et 56, ainsi qu'une portion de jonction 55 raccordant les deux branches 54 et 57.

Les pattes d'extrémité 53 et 56 sont ici formées par des extrémités pliées de la portion élastique 52 et plus particulièrement, respectivement, des branches 54 et 57.

La portion de jonction 55 est ici formée par des spires, depuis une extrémité de la branche 54, située à l'opposé de la patte d'extrémité 53, jusqu'à un tronçon coudé 58 qui est raccordé à une extrémité de la branche 57, située à l'opposé de la patte d'extrémité 56.

Le tronçon coudé 58 a ici globalement une forme de L, et présente un premier bras qui prolonge une spire de la portion de jonction 55 et un second bras, raccordé au premier bras et qui s'étend globalement transversalement à la portion de jonction 55 jusqu'à rejoindre la branche 57.

Le ressort 50 est ainsi configuré de sorte que les branches 54 et 57 s'étendent sensiblement dans un même plan P et fournissent des efforts sensiblement similaires par l'intermédiaire des pattes d'extrémité respectives 53 et 56.

On notera que sur la figure 12, le ressort 50 est montré dans une configuration dite libre ou de montage, c'est-à-dire avec les branches 54 et 57 qui présentent un écartement maximum par défaut, en l'absence de sollicitation extérieure.

Sur la figure 13, le ressort 50 est montré dans une configuration dite de roulage, avec les branches 54 et 57 qui présentent un écartement maximum en utilisation, lorsque le ressort 50 est en prise avec les garnitures 16 et 17, lesquelles ne sont pas appliquées sur le disque 8 et se trouvent dans un état neuf.

Sur la figure 14, le ressort 50 est montré dans une configuration dite de freinage, avec les branches 54 et 57 qui présentent un écartement sensiblement minimum, lorsque le ressort 50 est en prise avec les garnitures 16 et 17, lesquelles sont appliquées sur le disque 8 et se trouvent dans un état usé.

On notera que dans cette configuration de freinage avec garnitures usées, le ressort est dimensionné de sorte qu'il ne vient pas au contact du disque.

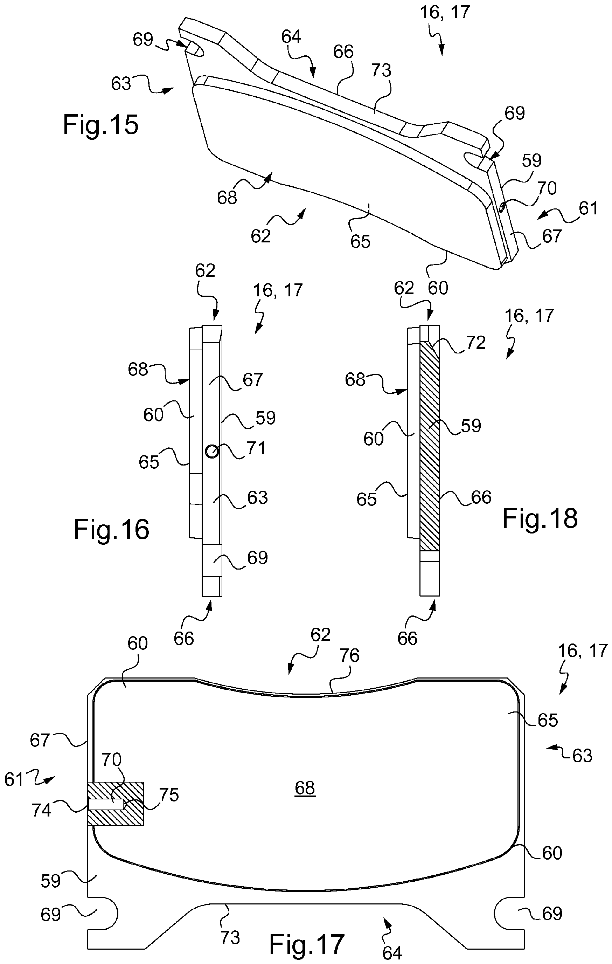

Les figures 15 à 18 illustrent les garnitures 16 et 17, qui sont ici identiques.

Ces garnitures 16, 17 présentent chacune un premier côté 61, un deuxième côté 62, un troisième côté 63 et un quatrième côté 64.

Le premier côté 61 et le troisième côté 63 sont ici opposés, et le deuxième côté 62 et le quatrième côté 64 sont ici opposés et rejoignent chacun le premier côté 61 et le troisième côté 63.

Ces garnitures 16, 17 comportent chacune une base 59 et une couche d'un matériau de friction 60 rapportée sur la base 59.

Chaque garniture 16, 17 présente une face principale d'appui 65 formée par la couche d'un matériau de friction 60 et par une portion de la base 59, ainsi qu'une face arrière 66, opposée à la face d'appui 65, et formée ici seulement par la base 59.

On notera que les portions des faces d'appui 65 des garnitures 16, 17 qui sont prévues pour venir au contact des faces respectives 47, 48 du disque 8, forment des zones d'appui 68, formée uniquement par au moins une partie de la couche de matériau de friction 60 des garnitures 16, 17 respectives.

Chaque garniture 16, 17 présente une tranche 67 définie par ses premier, deuxième, troisième et quatrième côtés 61 à 64.

Chaque garniture 16, 17 présente ici deux organes de positionnement 69 configurés pour permettre l'assujettissement mécanique de ces garnitures dans la position prédéterminée sur le système 10 par rapport audit disque 8, ainsi qu'expliqué plus haut.

En particulier, ces organes de positionnement sont ici formés par des encoches 69 ménagées dans la tranche 67, respectivement sur les premier et troisième côtés 61 et 63 de chaque garniture 16, 17.

Ces encoches 69 sont configurées pour être traversées par les axes porte-garnitures 51.

Ces encoches 69 sont ici ménagées dans la base 59 et en dehors de la zone d'appui 68.

Chaque garniture 16, 17 présente en outre deux organes d'assujettissement 70, 71 ménagés sur la tranche 67.

Ces organes d'assujettissement sont ici formés par des orifices 70, 71 respectivement ménagés sur les premier et troisième côtés 61 et 63 de chaque garniture 16, 17.

Ces orifices 70, 71 sont ici ménagés dans la base 59 et situés sensiblement au niveau de la zone d'appui 68, à distance des encoches 69.

Au surplus, ces orifices 70, 71 débouchent à une extrémité 74 sensiblement au centre des premier et troisième côtés 61 et 63 respectifs, et sont borgne à une extrémité opposée 75.

Les orifices 70, 71 des garnitures 16, 17 sont ici configurés pour recevoir respectivement les pattes d'extrémité 56 et 53 des ressorts 50. L'agencement des ressorts 50 de rappel des garnitures 16, 17 à l'intérieur des mâchoires 42 et 43 est tel que ces ressorts 50 ne peuvent s'extraire accidentellement des orifices 70, 71 lorsqu'ils sont en place sur les garnitures 16, 17. En effet, dans cette configuration, le jeu restant entre les ressorts et les mâchoires est suffisamment petit pour empêcher les pattes d'extrémité de ressortir des orifices.

En variante, les orifices des garnitures peuvent être configurés pour recevoir, par exemple par insertion à force, ou par soudage, ou par rivetage ou encore par collage, respectivement les pattes d'extrémité des ressorts.

En particulier, les orifices 70 et 71 de la garniture 16 sont prévus pour recevoir respectivement la patte d'extrémité 56 d'un premier ressort 50 et la patte d'extrémité 53 d'un second ressort 50 ; tandis que les orifices 70 et 71 de la garniture 17 sont prévus pour recevoir respectivement la patte d'extrémité 56 du second ressort 50 et la patte d'extrémité 53 du premier ressort 50.

Chaque garniture 16, 17 est en outre pourvue ici d'un chanfrein 72 ménagé dans la base 59, sur le deuxième côté 62, au niveau de la tranche 67 et de la face opposée 66.

Chaque garniture 16, 17 est également pourvue ici d'un congé 76 ménagé dans son deuxième côté 62 respectif et de concavité dirigée vers le quatrième côté 64 opposé au deuxième côté 62.

Chaque garniture 16, 17 est aussi pourvue ici d'un renfoncement 73 ménagé dans son quatrième côté 64 respectif.

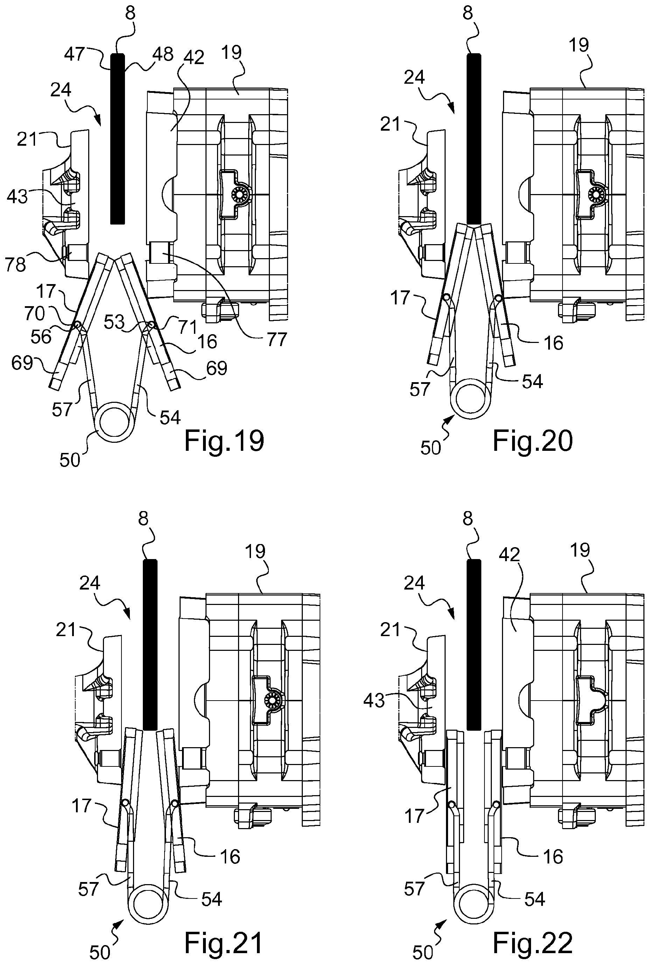

Les figures 19 à 23 illustrent schématiquement et partiellement le montage des garnitures 16 et 17 dans l'espace 24 à l'aide des ressorts 50 et des axes porte-garnitures 51.

Sur la figure 19, les ressorts 50, dont un seul est visible, sont assemblés avec les garnitures 16 et 17.

En particulier, les pattes d'extrémités 53 et 56 sont introduites respectivement dans l'orifice 71 de la garniture 16 et dans l'orifice 70 de la garniture 17. Les ressorts 50 sont alors dans leur configuration dite libre ou de montage (visible aussi figure 12).

Les garnitures 16 et 17 sont approchées, par une ouverture inférieure d'introduction, de l'espace 24 dans lequel est partiellement introduit le disque 8. On notera que le disque 8 est quant à lui introduit dans cet espace 24 par une ouverture supérieure d'introduction qui est opposée à l'ouverture inférieur d'introduction et de laquelle il débouche.

Sur la figure 19, les garnitures 16 et 17 sont légèrement insérées dans l'espace 24, ici sensiblement jusqu'aux puits 77 et 78 de réception des axes porte-garnitures 51. L'insertion des garnitures 16 et 17 peut être facilitée par la présence des chanfreins 72 ménagés sur ces dernières.

On notera que les garnitures 16 et 17 sont chacune inclinées à cette étape du montage de sorte à former un V inversé relativement large, avec la pointe du V définie par les deuxièmes côtés 62 des garnitures 16 et 17.

En d'autres termes, cela signifie que les ressorts 50 sont ici assujettis aux garnitures 16 et 17 tout en autorisant un léger déplacement de ces dernières par rapport aux ressorts. Ce déplacement est ici un pivotement qui peut être induit par l'application d'une force lors de l'insertion des garnitures 16 et 17. Ce pivotement n'est donc pas libre.

Sur la figure 20, les garnitures 16 et 17 sont insérées plus en profondeur dans l'espace 24 vers le disque 8 jusqu'à venir sensiblement au contact avec la tranche de ce dernier.

Les garnitures 16 et 17 tendent à se rapprocher, par leur quatrième côté 64, et sont moins inclinées que sur la figure 19, de sorte à former un V inversé relativement étroit.

Les branches des ressorts 50 se resserrent et ces derniers ont désormais tendance à forcer l'écartement des garnitures 16 et 17.

Sur la figure 21, les garnitures 16 et 17 sont légèrement pivotées autour des pattes d'extrémité 53 et 56 des ressorts 50, par exemple par application d'une force de pression sur les faces opposées 66 des garnitures, sensiblement au niveau des quatrièmes côtés 64 respectifs.

Les garnitures 16 et 17 se rapprochent donc l'une de l'autre, au niveau quatrièmes côtés 64 respectifs, tandis qu'elles s'écartent l'une de l'autre, au niveau des deuxièmes côtés 62 respectifs ; ménageant ainsi une distance suffisante pour l'interposition du disque 8 entre les garnitures 16 et 17.

Sur la figure 21, les garnitures 16 et 17 ne présente plus une forme de V et sont quasiment à la verticale.

Sur la figure 22, les garnitures 16 et 17 sont sensiblement à la verticale, les faces opposées 66 respectives étant partiellement appliquées contre respectivement la première mâchoire 42 et la deuxième mâchoire 43.

Les branches des ressorts 50 se resserrent encore et ces derniers forcent l'écartement des garnitures 16 et 17.

Les ressorts 50 sont alors dans leur configuration dite de roulage (visible aussi figure 13).

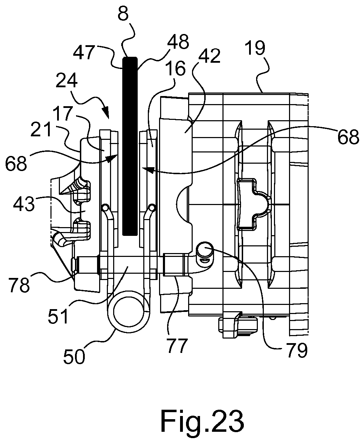

Sur la figure 23, les garnitures 16 et 17 sont insérées encore plus en profondeur dans l'espace 24 jusqu'à ce que les zones d'appui 68 respectives des garnitures 16 et 17 se trouvent en regard respectivement des faces 48 et 47 du disque 8, et jusqu'à ce que les encoches 69 des garnitures 16 et 17 se trouvent en regard respectivement des puits 77 et 78 des mâchoires respectives 42 et 43.

Les garnitures 16 et 17 se trouvent alors dans leur position prédéterminée et chaque axe porte-garniture 51 est monté, grâce à une anse de préhension 79, au travers d'un puit 77 de la mâchoire 42 qui est débouchant à chaque extrémité, ensuite au travers des encoches 69 respectives des garnitures 16 et 17, et ensuite dans un puit 78 de la mâchoire 43 ; de sorte à maintenir les garnitures 16 et 17 dans cette position prédéterminée.

Cela signifie que les garnitures 16 et 17 ne peuvent plus être déplacées selon une direction globalement transversale du système de freinage ferroviaire 10, tandis qu'ils sont mobiles selon une direction globalement longitudinale de ce système 10, pour l'enserrement et le desserrement du disque 8.

Sur la figure 23, où le système de freinage ferroviaire 10 est prêt à l'utilisation, on notera que les orifices 70, 71 et les pattes d'extrémité 53, 56 sont situés à distance des encoches 69.

On notera aussi que les branches 54 et 57 des ressorts 50 s'étendent à distance des garnitures 16, 17 et la portion de jonction 55 se situe à l'opposé du disque 8 ; et que ces branches 54 et 57 courent au moins partiellement le long et à proximité immédiate des mâchoires 42 et 43 de sorte que les pattes d'extrémité 53 et 56 des ressorts 50 ne peuvent pas s'échapper des orifices respectifs 70, 71 tant que les garnitures 16, 17 sont dans leur position prédéterminée.

Les branches 54 et 57 et la portion de jonction 55 des ressorts 50 s'étendent en regard respectivement du premier côté 61 et du troisième côté 63 des garnitures 16 et 17, au niveau desquels les pattes d'extrémité 53 et 56 sont introduites dans les orifices 70 et 71 des garnitures 16 et 17. Les ressorts 50 ne sont donc montés dans le système de freinage 10 que par le biais des pattes d'extrémité 53 et 56.Les branches 54 et 57 et la portion de jonction 55 sont ainsi sensiblement libres dans le système de freinage 10.

On notera également que les axes porte-garnitures 51 se trouvent à distance du disque 8.

Le système de freinage 10 permet, d'une part en distinguant les ressorts 50 de rappel des garnitures 16, 17 des encoches 69 et des axes porte-garnitures 51, et d'autre part en mettant à distance les orifices 70, 71 et les pattes d'extrémité 53, 56 de ces encoches 69, de bien maîtriser à la fois la force de rappel exercée sur les garnitures et les zones d'application de cette force sur ces garnitures.

Une telle maîtrise de la force exercée par les ressorts et de son application sur les garnitures permet d'écarter les garnitures du disque sans les déséquilibrer ou, en d'autres termes en les rappelant d'une manière particulièrement stable selon la direction globalement longitudinale. Si les garnitures sont appliquées à la verticale sur le disque, alors elles sont aussi rappelées tout en gardant une orientation verticale ou quasiment verticale.

On notera que l'application de la force exercée par chaque ressort se fait au niveau des zones d'appuis sur le disque des garnitures, pas en dehors de ces zones d'appuis.

Le démontage, non illustré, des garnitures du système de freinage peut être effectué en retirant les axes porte-garniture 51 puis en tirant, du côté de l'ouverture inférieure d'introduction, l'ensemble formé des garnitures 16, 17 et des ressorts 50.

Les étapes de montage/démontage décrites ci-dessus peuvent être réalisées aisément par un utilisateur effectuant le premier montage du système de freinage sur le véhicule, ou par un utilisateur effectuant la maintenance du véhicule et en particulier le remplacement des garnitures.

Ces utilisateurs n'ont pas besoin d'outil particulier car ces étapes de montage/démontage peuvent être effectuées simplement par des mouvements manuels de préhension et/ou d'appui sur les ressorts, par exemple au niveau des portions de jonctions ici formées par des spires, et/ou sur les garnitures et/ou sur les axes porte-garnitures.

Dans l'exemple de réalisation décrit ci-dessus, l'organe de freinage formé notamment par les garnitures, les ressorts et les axes porte-garnitures, est agencé de manière sensiblement symétrique autour du disque.

Dans une variante non illustrée, le système de freinage pourrait ne comporter qu'un seul ressort de rappel, et/ou chaque garniture pourrait n'être pourvu que d'un seul orifice et/ou que d'une seule encoche.

Dans d'autres variantes non illustrées :
- l'organe de rappel n'est pas formé par un ressort de torsion mais plutôt par un ressort à lame ;
- l'organe de rappel n'est pas réalisée en matière métallique mais plutôt en matière plastique voire en un matériau élastomère ;
- les pattes d'extrémité peuvent être assujetties sur la couche de matériau de friction plutôt que sur la base, et/ou les garnitures peuvent être dépourvues de base ;
- les pattes d'extrémité ne sont pas formées par des extrémités pliées mais plutôt par des pièces rapportées aux extrémités de la portion élastique ;
- les organes d'assujettissement ne sont pas formés par des orifices mais plutôt par des pattes en saillie de la tranche du côté de la face d'appui ou au contraire, du côté de la face opposée à la face d'appui ;
- les organes de positionnement ne sont pas formés par des encoches mais plutôt par des trous ou par des pattes en saillie des garnitures ;
- l'agent de pression est hydraulique plutôt que pneumatique ;
- il ne s'agit pas d'un agent de pression mais plutôt d'une alimentation électrique du piston de freinage et, le cas échéant, le système peut être dépourvu de l'organe ressort ;
- la compression des ressorts peut-être générée par un dispositif électromécanique plutôt que par un agent de pression pneumatique ou hydraulique ; et/ou
- le système de freinage ferroviaire forme un étrier pivotant à action directe du piston sur une des garnitures, mais l'étrier pourrait être à action indirecte sur les garnitures, via par exemple un coin et/ou un régleur.

On rappelle plus généralement que l'invention ne se limite pas aux exemples décrits et représentés.

## Revendications

1. Système de freinage ferroviaire pour véhicule ferroviaire à organes de freinage à garnitures (16, 17) et à au moins un disque (8), comportant au moins un jeu de dites garnitures (16, 17), chaque garniture (16, 17) présentant au moins un organe de positionnement (69) configuré pour permettre l'assujettissement mécanique de chaque dite garniture dans une position prédéterminée sur ledit système (10) par rapport audit disque (8) et une face principale d'appui (65) configurée pour venir au contact dudit disque (8) pour l'enserrer sous l'action, directe ou indirecte, d'un actionneur (29) dudit système (10), ainsi qu'au moins un organe de rappel (50) configuré pour écarter lesdites garnitures (16, 17) dudit disque (8) pour le desserrer lorsque lesdites garnitures sont libérées de l'action, directe ou indirecte, dudit actionneur (29) ; chaque garniture (16, 17) présente plusieurs côtés (61-64) définissant une tranche (67) et au moins un organe d'assujettissement (70, 71) ménagé sur ladite tranche (67), ledit au moins un organe de rappel (50) présente deux pattes d'extrémité (53, 56) qui sont opposées, raccordées l'une à l'autre par une portion élastique (52), et configurées pour être assujetties mécaniquement chacune avec un dit organe d'assujettissement (70, 71) desdites garnitures respectives (16, 17), et ledit système (10) est configuré de sorte que lesdits organes d'assujettissement (70, 71) et lesdites pattes d'extrémité (53, 56) sont situés à distance dudit au moins un organe de positionnement (69), **caractérisé en ce que** ledit au moins un organe d'assujettissement (70,71) respectif est ménagé sensiblement au centre d'un desdits côtés (61-64).

2. Système selon la revendication 1, **caractérisé en ce que** chaque dit organe d'assujettissement (70, 71) s'étend, en section, au niveau d'une zone d'appui (68) définie par ladite face principale d'appui (65) de ladite garniture (16, 17) respective.

3. Système selon l'une des revendications 1 et 2, **caractérisé en ce que** chaque dit organe de positionnement (69) est ménagé en dehors de ladite zone d'appui (68) de ladite garniture respective.

4. Système selon l'une quelconque des revendications 1 à 3, **caractérisé en ce qu'**au moins un dit organe d'assujettissement est formé par un orifice (70, 71) ménagé dans ladite tranche (67) ou par un pontet en saillie de ladite tranche.

5. Système selon l'une quelconque des revendications 1 à 4, **caractérisé en ce que** chaque dite garniture (16, 17) comporte une base (59) et une couche d'un matériau de friction (60) rapportée sur ladite base, et au moins un dit organe d'assujettissement (70, 71) est ménagé dans la base ou dans la couche de matériau de friction.

6. Système selon l'une quelconque des revendications 1 à 5, **caractérisé en ce que** ladite portion élastique (52) dudit au moins un organe de rappel (50) comporte deux branches (54, 57) raccordées chacune à une patte d'extrémité respective (53, 56) ainsi qu'un tronçon de jonction (55) raccordant les deux dites branches (54, 57), ledit système étant configuré de sorte que lesdites branches (54, 57) s'étendent depuis lesdites pattes d'extrémité (53, 56) à distance desdites garnitures (16, 17) et ledit tronçon de jonction (55) est prévu pour se trouver à l'opposé du disque (8).

7. Système selon l'une quelconque des revendications 1 à 6, **caractérisé en ce que** ledit au moins un organe de rappel est formé par un ressort de torsion (50) ou par un ressort lame.

8. Système selon l'une quelconque des revendications 1 à 7, **caractérisé en ce que** lesdites pattes d'extrémité dudit au moins un organe de rappel (50) sont formées par des extrémités pliées (53, 56) de ladite portion élastique (52) ou par des pièces rapportées.

9. Système selon l'une quelconque des revendications 1 à 8, **caractérisé en ce que** lesdites pattes d'extrémité (53, 56) dudit au moins un organe de rappel (50) sont assujetties mécaniquement avec lesdits organes d'assujettissement (70, 71) respectifs par insertion à force, ou par soudage, ou par rivetage ou encore par collage.

10. Système selon l'une quelconque des revendications 1 à 9, **caractérisé en ce que** ledit au moins un organe de rappel (50) est réalisé en matière métallique ou plastique et est configuré pour appliquer une force de l'ordre d'environ 30 N à environ 100 N sur lesdites garnitures (16, 17).

11. Système selon l'une quelconque des revendications 1 à 10, **caractérisé en ce qu'**il comporte deux dits organes de rappel (50) et quatre dits organe d'assujettissement (70, 71), qui sont disposés de part et d'autre des deux dites garnitures (16, 17), de préférence symétriquement.

12. Système de freinage ferroviaire selon l'une quelconque des revendications 1 à 11, **caractérisé en ce qu'**il comporte un dit frein de parking (12) ayant un corps (18) pourvu d'un cylindre (19) présentant une cavité (20), d'un dit support garniture (21) assujetti mécaniquement audit cylindre (19) et configuré pour porter lesdites garnitures (16, 17) et recevoir au moins partiellement ledit disque (8), et d'un dit actionneur (29) comportant un piston de freinage (31) au moins partiellement logé dans ladite cavité (20), mobile par rapport audit corps (18) et configuré pour agir sur au moins une dite garniture (16) au travers dudit support garniture (21).

13. Système selon la revendication 12, **caractérisé en ce que** ledit support garniture (21) comporte deux mâchoires (42, 43) séparées d'un espace (24) prévu pour recevoir au moins partiellement ledit disque (8), ainsi qu'au moins un axe porte-garnitures (51) configuré pour coopérer avec lesdits organes de positionnements (69) desdites garnitures (16, 17) et bloquer ces dernières dans ladite position prédéterminée, ledit au moins un axe porte-garnitures (51) étant situé à distance dudit disque (8) lorsque ce dernier est reçu dans ledit espace (24) entre lesdites mâchoires (42, 43).

14. Système selon la revendication 13, **caractérisé en ce qu'**une première des deux dites mâchoires (42) est montée sur ledit cylindre (21) tandis qu'une deuxième des deux dites mâchoires (43) est montée sur ladite première mâchoire (42) par l'intermédiaire d'au moins une colonnette (44) qui s'étend depuis ladite première mâchoire (42), et ledit piston de freinage (31) agit directement sur une dite garniture (16) montée sur ladite première mâchoire (42) et indirectement, par déplacement dudit corps (18) via ladite au moins une colonnette (44) et via ladite deuxième mâchoire (43), sur une autre dite garniture (17) montée sur cette deuxième mâchoire (43).

## Patentansprüche

1. Schienenbremssystem für ein Schienenfahrzeug mit Bremselementen mit Belägen (16, 17) und mit mindestens einer Scheibe (8), umfassend mindestens einen Satz der Beläge (16, 17), wobei jeder Belag (16, 17) mindestens ein Positionierungselement (69), das dazu konfiguriert, die mechanische Befestigung jedes Belags in einer vorbestimmten Position auf dem System (10) im Bezug auf die Scheibe (8) zu ermöglichen, und eine Hauptauflagefläche (65), die dazu konfiguriert ist, in Kontakt mit der Scheibe (8) zu kommen, um diese unter direkter oder indirekter Wirkung eines Betätigungsglieds (29) des Systems (10) einzuklemmen, sowie mindestens ein Rückstellelement (50) aufweist, das dazu konfiguriert ist, die Beläge (16, 17) der Scheibe (8) auseinanderzuziehen, um diese zu lockern, wenn die Beläge von der direkten oder indirekten Wirkung des Betätigungsglieds (29) gelöst werden;
wobei jeder Belag (16, 17) mehrere Seiten (61-64) aufweist, die eine Seitenfläche (67) und mindestens ein Befestigungselement (70, 71), das an der Seitenfläche (67) vorgesehen ist, definieren, wobei das mindestens eine Rückstellelement (50) zwei Endklauen (53, 56) aufweist, die einander gegenüberliegen, miteinander durch einen elastischen Abschnitt (52) verbunden und dazu konfiguriert sind, jeweils an einem Befestigungselement (70, 71) der jeweiligen Beläge (16, 17) mechanisch befestigt zu sein, und wobei das System (10) derart konfiguriert ist, dass die Befestigungselemente (70, 71) und die Endklauen (53, 56) sich im Abstand von dem mindestens einen Positionierungselement (69) befinden, **dadurch gekennzeichnet, dass** das jeweilige mindestens eine Befestigungselement (70, 71) im Wesentlichen in der Mitte einer der Seiten (61-64) vorgesehen ist.

2. System nach Anspruch 1, **dadurch gekennzeichnet, dass** jedes Befestigungselement (70, 71) sich im Querschnitt auf Höhe eines Auflagebereichs (68) erstreckt, der durch die Hauptauflagefläche (65) des jeweiligen Belags (16, 17) definiert wird.

3. System nach einem der Ansprüche 1 und 2, **dadurch gekennzeichnet, dass** jedes Positionierungselement (69) außerhalb des Auflagebereichs (68) des jeweiligen Belags vorgesehen ist.

4. System nach einem der Ansprüche 1 bis 3, **dadurch gekennzeichnet, dass** mindestens ein Befestigungselement durch eine Öffnung (70, 71), die in der Seitenfläche (67) vorgesehen ist, oder durch einen von der Seitenfläche vorstehenden Bügel gebildet wird.

5. System nach einem der Ansprüche 1 bis 4, **dadurch gekennzeichnet, dass** jeder Belag (16, 17) eine Basis (59) und eine Schicht aus einem Reibungsmaterial (60), die auf der Basis angebracht ist, umfasst und mindestens ein Befestigungselement (70, 71) in der Basis oder in der Schicht aus Reibungsmaterial vorgesehen ist.

6. System nach einem der Ansprüche 1 bis 5, **dadurch gekennzeichnet, dass** der elastische Abschnitt (52) des mindestens einen Rückstellelements (50) zwei Schenkel (54, 57) umfasst, die jeweils mit einer jeweiligen Endklaue (53, 56) verbunden sind, sowie einen Verbindungsabschnitt (55), der die beiden Schenkel (54, 57) miteinander verbindet, wobei das System derart konfiguriert ist, dass die Schenkel (54, 57) sich von den Endklauen (53, 56) von den Belägen (16, 17) weg erstrecken und der Verbindungsabschnitt (55) der Scheibe (8) gegenüberliegend vorgesehen ist.

7. System nach einem der Ansprüche 1 bis 6, **dadurch gekennzeichnet, dass** das mindestens eine Rückstellelement durch eine Torsionsfeder (50) oder durch eine Blattfeder gebildet wird.

8. System nach einem der Ansprüche 1 bis 7, **dadurch gekennzeichnet, dass** die Endklauen des mindestens einen Rückstellelements (50) durch gebogene Enden (53, 56) des elastischen Abschnitts (52) oder durch Einsatzteile gebildet werden.

9. System nach einem der Ansprüche 1 bis 8, **dadurch gekennzeichnet, dass** die Endklauen (53, 56) des mindestens einen Rückstellelements (50) mechanisch an den jeweiligen Befestigungselementen (70, 71) durch Einpressen oder durch Schweißen oder durch Nieten oder noch durch Verkleben befestigt werden.

10. System nach einem der Ansprüche 1 bis 9, **dadurch gekennzeichnet, dass** das mindestens eine Rückstellelement (50) aus einem Metall- oder Kunststoffmaterial besteht und dazu konfiguriert ist, eine Kraft der Größenordnung von ungefähr 30 N bis ungefähr 100 N auf die Beläge (16, 17) auszuüben.

11. System nach einem der Ansprüche 1 bis 10, **dadurch gekennzeichnet, dass** es zwei Rückstellelemente (50) und vier Befestigungselemente (70, 71) umfasst, die vorzugsweise symmetrisch auf beiden Seiten der beiden Beläge (16, 17) angeordnet sind.

12. Schienenbremssystem nach einem der Ansprüche 1 bis 11, **dadurch gekennzeichnet, dass** es eine Feststellbremse (12) umfasst, die einen Körper (18) aufweist, der mit einem Zylinder (19) mit einem Hohlraum (20), einem Belagträger (21), der mechanisch an dem Zylinder (19) befestigt und dazu konfiguriert ist, die Beläge (16, 17) zu tragen und die Scheibe (8) mindestens teilweise aufzunehmen, und einem Betätigungsglied (29) ausgestattet ist, das einen Bremskolben (31) umfasst, der mindestens teilweise in dem Hohlraum (20) untergebracht, im Bezug auf den Körper (18) beweglich und dazu konfiguriert ist, über den Belagträger (21) auf mindestens einen Belag (16) einzuwirken.

13. System nach Anspruch 12, **dadurch gekennzeichnet, dass** der Belagträger (21) zwei Backen (42, 43) umfasst, die einen Raum (24) trennen, der dazu vorgesehen ist, die Scheibe (8) mindestens teilweise aufzunehmen, sowie mindestens eine Belagträgerachse (51), die dazu konfiguriert ist, mit den Positionierungselementen (69) der Beläge (16, 17) zusammenzuwirken und letztere in der vorbestimmten Position zu blockieren, wobei die mindestens eine Belagträgerachse (51) sich in einem Abstand von der Scheibe (8) befindet, wenn letztere in dem Raum (24) zwischen den Backen (42, 43) aufgenommen ist.

14. System nach Anspruch 13, **dadurch gekennzeichnet, dass** eine erste der beiden Backen (42) am Zylinder (21) montiert ist, während eine zweite der beiden Backen (43) an der ersten Backe (42) mit Hilfe mindestens eines Bolzens (44) montiert ist, der sich von der ersten Backe (42) aus erstreckt, und der Bremskolben (31) direkt auf einen Belag (16), der an der ersten Backe (42) montiert ist, oder indirekt, durch Verschieben des Körpers (18) über den mindestens einen Bolzen (44) und über die zweite Backe (43), auf einen weiteren Belag (17), der an dieser zweiten Backe (43) montiert ist, wirkt.

## Claims

1. A rail vehicle braking system for a rail vehicle having brake members with linings (16, 17) and at least one disk (8), comprising at least one set of said linings (16, 17), each lining (16, 17) having at least one positioning member (69) configured to enable the mechanical connection of each said lining in a predetermined position on said system (10) relative to said disk (8) and a main bearing face (65) configured to come into contact with said disk (8) to clamp it under the direct or indirect action of an actuator (29) of said system (10), and further comprising at least one return member (50) configured to separate said linings (16, 17) from said disk (8) to unclamp it when said linings are released from the direct or indirect action of said actuator (29);
each lining (16, 17) has several sides (61-64) defining an edge surface (67) and at least one connecting member (70, 71) provided on said edge surface (67), said at least one return member (50) has two end lugs (53, 56) which are opposite, connected to each other by an elastic portion (52), and configured for each to be mechanically connected with a said connecting member (70, 71) of said respective linings (16, 17), and said system (10) is configured such that said connecting members (70, 71) and said end lugs (53, 56) are located at a distance from said at least one positioning member (69), **characterized in that** the said at least one respective connecting member (70, 71) is provided substantially at the center of one of said sides (61-64).

2. A system according to claim 1, **characterized in that** each said connecting member (70, 71) extends, in cross-section, at the location of a bearing zone (68) defined by said main bearing face (65) of said respective lining (16, 17).

3. A system according to one of claims 1 and 2, **characterized in that** each said positioning member (69) is provided outside said bearing zone (68) of said respective lining.

4. A system according to any one of claims 1 to 3, **characterized in that** at least one said connecting member is formed by an aperture (70, 71) provided in said edge surface (67) or by a bridging member projecting from said edge surface.

5. A system according to any one of claims 1 to 4, **characterized in that** each said lining (16, 17) comprises a base (59) and a layer of a friction material (60) added onto said base, and at least one said connecting member (70, 71) is provided in the base or in the layer of friction material.

6. A system according to any one of claims 1 to 5, **characterized in that** said elastic portion (52) of said at least one return member (50) comprises two branches (54, 57) each connected to a respective end lug (53, 56) and further comprises a joining section (55) connecting the two said branches (54, 57), said system being configured such that said branches (54, 57) extend from said end lugs (53, 56) at a distance from said linings (16, 17) and said joining section (55) is provided to be at a remote opposite location from the disk (8).

7. A system according to any one of claims 1 to 6, **characterized in that** said at least one return member is formed by a torsion spring (50) or by a blade spring.

8. A system according to any one of claims 1 to 7, **characterized in that** said end lugs of said at least one return member (50) are formed by folded ends (53, 56) of said elastic portion (52) or by added-on parts.

9. A system according to any one of claims 1 to 8, **characterized in that** said end lugs (53, 56) of said at least one return member (50) are mechanically connected with said respective connecting members (70, 71) by insertion by force, or by welding, or by riveting or by bonding.

10. A system according to any one of claims 1 to 9, **characterized in that** said at least one return member (50) is formed of metal or plastic material and is configured to apply a force of the order of approximately 30 N to approximately 100 N to said linings (16, 17).

11. A system according to any one of claims 1 to 10, **characterized in that** it comprises two said return members (50) and four said connecting members (70, 71), which are disposed on opposite sides of the two said linings (16, 17), preferably symmetrically.

12. A rail vehicle braking system according to any one of claims 1 to 11, **characterized in that** it comprises a said parking brake (12) having a body (18) provided with a cylinder (19) having a cavity (20), with a said lining mounting (21) mechanically connected to said cylinder (19) and configured to bear said linings (16, 17) and receive said disk (8), at least partly, and with a said actuator (29) comprising a braking piston (31) at least partly housed in said cavity (20), movable relative to said body (18) and configured to act on at least one said lining (16) through said lining mounting (21).

13. A system according to claim 12, **characterized in that** said lining mounting (21) comprises two jaws (42, 43) separated by a space (24) provided to receive at least partly said disk (8), as well as at least one lining-carrier shaft (51) configured to cooperate with said positioning members (69) of said linings (16, 17) and lock these latter in said predetermined position, said at least one lining-carrier shaft (51) being located at a distance from said disk (8) when the latter is received in said space (24) between said jaws (42, 43).

14. A system according to claim 13, **characterized in that** a first of the two said jaws (42) is mounted on said cylinder (21) while a second of the two said jaws (43) is mounted on said first jaw (42) via at least one column (44) which extends from said first jaw (42), and said braking piston (31) acts directly on said lining (16) mounted on said first jaw (42) and indirectly, by movement of said body (18) via said at least one column (44) and via said second jaw (43), on another said lining (17) mounted on that second jaw (43).
